# EUROPEAN PATENT APPLICATION

(11) **EP 4 614 319 A1**
(43) Date of publication of application: **10.09.2025**
(21) Application number: 24895166.7
(22) Date of filing: 29.11.2024
(51) Int. Cl.: G06F 9/448

(54) **DATA MANAGEMENT METHOD AND ELECTRONIC DEVICE**

(30) Priority: 10.01.2024 CN 202410042134; 07.06.2024 CN 202410745339
(71) Applicant: Huawei Technologies Co., Ltd., Shenzhen, Guangdong 518129 (CN)
(72) Inventor: BIAN, Chao, Shenzhen Guangdong 518129 (CN)
(74) Representative: Maiwald GmbH
(86) International application number: PCT/CN2024/135558
(87) International publication number: WO 2025/148553

(57) **Abstract**

This application discloses a data management method and an electronic device. An operating system of the electronic device may provide a unified interface and a capability for invoking when an application enables a function, to implement processing such as acquiring, encoding, storing, sharing, decoding, and playing on media data. In this way, in a running process of each application, standardized, unified, and convenient management can be performed on the media data through the unified interface and the capability that are provided by the operating system of the electronic device. This prevents each application from managing media data based on a data management system of each application, breaks a boundary of media data in an application and a device, and improves user experience in using media data.

## Description

This application claims priorities to Chinese Patent Application No. 202410042134.3, filed with the China National Intellectual Property Administration on January 10, 2024, and entitled "METHOD FOR IMPLEMENTING UNIFIED MEDIA FRAMEWORK", and to Chinese Patent Application No. 202410745339.8, filed with the China National Intellectual Property Administration on June 7, 2024, and entitled "DATA MANAGEMENT METHOD AND ELECTRONIC DEVICE", both of which are incorporated herein by reference in their entireties.

### TECHNICAL FIELD

This application relates to the field of terminal and computer technologies, and in particular, to a data management method and an electronic device.

### BACKGROUND

With continuous development of the terminal field, more applications are installed in an electronic device, and more media data such as a text, a picture, a video, and an audio is generated in the electronic device.

### SUMMARY

This application provides a data management method and an electronic device, to implement standardized, unified, and convenient management of media data.

According to a first aspect, an embodiment of this application provides a data management method. The method is applied to a first electronic device, a first operating system runs on the first electronic device, a first application runs on the first operating system, and the first operating system provides a first interface, a media data interface, and a second capability. The first application is a third-party application, the first application includes program code for invoking the first interface, the first interface is configured to invoke the media data interface, and the media data interface encapsulates the second capability. The second capability includes a capability of performing one or more of the following processing on media data: acquiring, encoding, storing, sharing, decoding, and playing. The method includes: displaying a user interface of the first application, where the user interface presents a first option corresponding to a first function; detecting an operation performed on the first option; and enabling the first function through the first interface in response to the operation, where the first function is used to perform one or more of the following processing on first media data: acquiring, encoding, storing, sharing, decoding, and playing, the second capability further includes a third capability, and in a process of enabling the first function, the third capability is used to perform one or more of the following: setting a data type of the first media data, managing a lifecycle of the first media data, managing security of the first media data, setting a data model of the first media data, and performing distributed management on the first media data.

The method provided in the first aspect is implemented, so that a unified media data management platform may be provided to implement unified management of media data. In this way, an application can process media data according to a unified rule and format. This prevents the application from managing the media data based on a data management system of the application, breaks a boundary of media data in an application and a device, and improves user experience in using media data.

With reference to the first aspect, in a possible implementation, a parameter input by the first interface includes one or more of the following: a device name, an application name of the first application, and a parameter input by the first application. The parameter input by the first application is a parameter of the first function and parameter content, and the parameter content includes one or more of the following: description information of the first function, the first media data, and indication information of the first media data.

With reference to the first aspect, in a possible implementation, the first function includes a facial recognition function, and the parameter input by the first application includes a parameter of the facial recognition function, coordinates of a face, and an image of the face; or the first function includes a beautification function, and the parameter input by the first application includes a parameter of the beautification function, a beautification level, and face information.

With reference to the first aspect, in a possible implementation, a parameter input by the media data interface includes capability indication information, the parameter of the first function, and the first media data or the indication information of the first media data. The indication information of the first media data is all or some parameters input by the first application, and/or the indication information of the first media data is determined by the first operating system. The capability indication information indicates a capability invoked by the media data interface in the second capability.

With reference to the first aspect, in a possible implementation, the first function is a photographing function, the first media data includes one or more of the following: a photographing flow and a preview flow, and the capability indication information indicates a capability of acquiring the first media data in the second capability; or the first function is a picture viewing function, the first media data includes one or more of the following: a big picture and a thumbnail, and the capability indication information indicates a capability of storing the first media data in the second capability; or the first function is a music playing function, the first media data is a piece of music, the indication information of the first media data includes one or more of the following: a music name, a music size, and music duration, and the capability indication information indicates a capability of playing the first media data in the second capability; or the first function is a file creation function or a file deletion function, the first media data is a file, the indication information of the first media data includes one or more of the following: a file name, a file owner, a file path, and a file size, and the capability indication information indicates a capability of storing the first media data in the second capability.

With reference to the first aspect, in a possible implementation, a parameter input by the second capability includes the parameter of the first function and the first media data or the indication information of the first media data. The indication information of the first media data is the all or some parameters input by the first application, and/or the indication information of the first media data is determined by the first operating system.

With reference to the first aspect, in a possible implementation, the third capability includes a media data type capability. The media data type capability is used to determine the data type of the first media data based on the parameter input by the first application, and the data type is a text, a picture, an audio, or a video.

It can be learned that, through the media data type capability, media data of each application can be classified based on a unified and standardized type, so that media data that is of each application and that is with a same attribute is not distributed in a discrete manner. This facilitates unified management of various media data in a system.

With reference to the first aspect, in a possible implementation, the third capability includes a data lifecycle capability. The data lifecycle capability is used to perform one or more of the following: setting a validity period of the first media data, and processing the first media data when the validity period of the first media data expires.

It can be learned that, through the data lifecycle capability, an entire process from generation to elimination of media data of different applications can be managed in a unified manner, so that the media data of each application can be eliminated according to a unified rule, and generation of junk data in the system is reduced.

With reference to the first aspect, in a possible implementation, the third capability includes a data security management capability. The data security management capability is used to verify whether content of the first media data complies with a preset regulation.

It can be learned that, through the data security management capability, security of the media data of each application can be managed according to a unified rule. This improves security of using the media data by a user, and reduces a risk of media data leakage, emergence of non-compliant information, or the like.

With reference to the first aspect, in a possible implementation, the third capability includes a unified media data capability. The unified media data capability is used to set the data model of the first media data when the some or all parameters input by the first application are null values; and the data model of the first media data includes the parameter of the first function and the first media data or the indication information of the first media data. The indication information of the first media data is the all or some parameters input by the first application, and/or the indication information of the first media data is determined by the first operating system.

It can be learned that, through the unified media data capability, media data transferred when each application enables a function can be unified and standardized, so that the media data of each application can maintain a unified and standardized data format. This resolves a problem of data fragmentation between applications and between devices, and lays a foundation for smooth data sharing between the applications and between the devices.

With reference to the first aspect, in a possible implementation, the third capability includes a distributed management capability. The distributed management capability is used to provide a capability of executing the first function on a second electronic device or a capability of executing the first function through a second application on the first electronic device, and the second electronic device and the first electronic device are logged in with a same account.

It can be learned that, through the distributed management capability, a boundary of media data between the applications and between the devices can be broken, thereby implementing convenient and smooth sharing of media data among a plurality of applications and among a plurality of devices.

With reference to the first aspect, in a possible implementation, the first media data is second media data created by the second application before the first application enables the first function, and a data format of the second media data is the same as that of media data processed through the third capability.

In other words, the first application and the second application may share media data by using an access mechanism. Different applications may invoke an interface provided by the first operating system, to unify and standardize media data of the applications, and share the media data.

With reference to the first aspect, in a possible implementation, the first media data is obtained by parsing and reconstructing second media data created by the second application before the first application enables the first function, a data format of the second media data is different from that of media data processed through the third capability, and a data format of the first media data is the same as that of the media data processed through the third capability.

In other words, the second application may share media data by using a delegation mechanism. It is considered that some applications are not adapted to the first operating system, and cannot process media data through the first interface, the media data interface, the second capability, and the third capability to standardize a format of media data of the applications. Therefore, the media data may be directly parsed and reconstructed, and the media data is reassembled into media data in a unified format, so that another application can recognize and use the media data, thereby implementing data sharing between applications.

With reference to the first aspect, in a possible implementation, the first media data is media data created by the second application, and the second application does not grant access permission on the first media data. Before the enabling the first function, the method further includes: querying the second application, to obtain permission of the first application to access the first media data.

In other words, the media data may be shared between applications by using a dynamic mechanism. When an application needs to access media data across applications, a query-response manner may be used. After the application obtains access permission on the media data, a bridge for sharing the media data may be temporarily established. This avoids excessive opening and sharing of the media data, and ensures security of the media data.

With reference to the first aspect, in a possible implementation, the second application is an application on the first electronic device or the second electronic device.

For example, the second electronic device may be a device that is logged in with a same account as the first electronic device.

If the second application is an application on the first electronic device, the first electronic device may implement smooth and simple data sharing between applications by using the plurality of mechanisms. If the second application is an application on the second electronic device, the first electronic device and the second electronic device may implement smooth and simple data sharing between devices by using the plurality of mechanisms.

According to a second aspect, an embodiment of this application provides an electronic device. The electronic device includes a memory, a processor, and a computer program stored in the memory. The computer program includes a first operating system, a first application runs on the first operating system, and the first operating system provides a first interface, a media data interface, and a second capability. The first application is a third-party application, the first application includes program code for invoking the first interface, the first interface is configured to invoke the media data interface, and the media data interface encapsulates the second capability. The second capability includes a capability of performing one or more of the following processing on media data: acquiring, encoding, storing, sharing, decoding, and playing. The second capability further includes a third capability, and the third capability includes a capability of performing one or more of the following processing on the media data: setting a data model of the media data, setting a data type of the media data, managing a lifecycle of the media data, managing security of the media data, and performing distributed management on the media data. The processor executes the computer program to implement the method described in any one of the first aspect or the implementations of the first aspect.

According to a third aspect, an embodiment of this application provides a computer-readable storage medium. The computer-readable storage medium stores a computer program. The computer program includes a first operating system, a first application runs on the first operating system, and the first operating system provides a first interface, a media data interface, a second capability, and a third capability. The first application is a third-party application, the first application includes program code for invoking the first interface, the first interface is configured to invoke the media data interface, and the media data interface encapsulates the second capability. The second capability includes a capability of performing one or more of the following processing on media data: acquiring, encoding, storing, sharing, decoding, and playing. The second capability further includes the third capability, and the third capability includes a capability of performing one or more of the following processing on the media data: setting a data model of the media data, setting a data type of the media data, managing a lifecycle of the media data, managing security of the media data, and performing distributed management on the media data. When the computer program is executed by a processor, the method described in any one of the first aspect or the implementations of the first aspect is implemented.

According to a fourth aspect, an embodiment of this application provides a computer program product. The computer program product includes a computer program. The computer program includes a first operating system, a first application runs on the first operating system, and the first operating system provides a first interface, a media data interface, and a second capability. The first application is a third-party application, the first application includes program code for invoking the first interface, the first interface is configured to invoke the media data interface, and the media data interface encapsulates the second capability. The second capability includes a capability of performing one or more of the following processing on media data: acquiring, encoding, storing, sharing, decoding, and playing. The second capability further includes a third capability, and the third capability includes a capability of performing one or more of the following processing on the media data: setting a data model of the media data, setting a data type of the media data, managing a lifecycle of the media data, managing security of the media data, and performing distributed management on the media data. When the computer program is executed by a processor, the method described in any one of the first aspect or the implementations of the first aspect is implemented.

### BRIEF DESCRIPTION OF DRAWINGS

FIG. 1 is a diagram of a difference between a data processing method according to an embodiment of this application and a data management method according to an embodiment of this application;
FIG. 2A is a diagram of a software architecture of an electronic device 100 according to an embodiment of this application;
FIG. 2B is a diagram of a relationship between modules in a software architecture according to an embodiment of this application;
FIG. 2C is a diagram of an interface invoking relationship according to an embodiment of this application;
FIG. 3 is a diagram of a principle of data sharing between applications in an existing mechanism according to an embodiment of this application;
FIG. 4 is a diagram of a principle of data sharing between applications in an access mechanism according to an embodiment of this application;
FIG. 5 is a diagram of a principle of data sharing between applications in a delegation mechanism according to an embodiment of this application;
FIG. 6 is a diagram of a principle of data sharing between applications in a dynamic mechanism according to an embodiment of this application;
FIG. 7 is a schematic flowchart of a data management method according to an embodiment of this application;
FIG. 8 is a diagram of interface invoking in an operating system when an electronic device 100 implements a photographing function through a camera application according to an embodiment of this application;
FIG. 9 is a diagram of interface invoking in an operating system when an electronic device 100 implements a picture viewing function through a gallery application according to an embodiment of this application;
FIG. 10 is a diagram of interface invoking in an operating system when an electronic device 100 implements a music playing function through a music application according to an embodiment of this application;
FIG. 11 is a diagram of interface invoking in an operating system when an electronic device 100 implements a file creation function through a storage application according to an embodiment of this application;
FIG. 12 is a diagram of interface invoking in an operating system when an electronic device 100 implements a file deletion function through a storage application according to an embodiment of this application; and
FIG. 13 is a diagram of a hardware structure of an electronic device 100 according to an embodiment of this application.

### DESCRIPTION OF EMBODIMENTS

The technical solutions according to embodiments of this application are clearly and completely described in the following with reference to the accompanying drawings. In descriptions of embodiments of this application, unless otherwise specified, "/" indicates "or". For example, A/B may indicate A or B. The term "and/or" in this specification merely describes an association relationship between associated objects, and indicates that three relationships may exist. For example, A and/or B may indicate the following three cases: Only A exists, both A and B exist, and only B exists. In addition, in the descriptions of embodiments of this application, "a plurality of" means two or more.

The following terms "first" and "second" are merely intended for a purpose of description, and shall not be understood as implying or implying relative importance or implicitly indicating a quantity of indicated technical features. Therefore, a feature limited by "first" and "second" may explicitly or implicitly include one or more features. In the descriptions of embodiments of this application, unless otherwise specified, "a plurality of" means two or more.

Currently, a plurality of applications may be installed on an electronic device to meet different usage requirements of a user. However, each application has its own data management system, which makes media data between applications and between devices independent, isolated, and not unified.

For example, for a picture M captured by using a camera application, the picture M may be viewed through a gallery application or an instant chat application, and the picture M may be processed, for example, modified or deleted. However, because each of the gallery application and the instant chat application has its own data management system, the gallery application may perform an operation on a picture M1.0 when processing the picture M, and the instant chat application may perform an operation on a picture M2.0 when processing the picture M. In this way, although the picture M can be viewed through both the gallery application and the instant chat application, in the gallery application, an operation performed on the picture M, for example, an operation such as deletion, modification, or viewing, is the operation performed on the picture M1.0, and does not affect the picture M2.0. In other words, even if a user initiates deletion of the picture M in the gallery application, the user can still view the picture M through the instant chat application; or even if a user initiates modification of the picture M in the gallery application, the picture M viewed by the user through the instant chat application is still the picture M that is not modified.

For another example, if a user locally downloads a video N through video playing software 1, the user cannot view the video N when viewing a local video through video playing software 2.

It can be learned that, because each application has an independent data management system, problems such as complex operations, chaotic data formats, and confusing interfaces exist in data sharing and information sharing between applications, and an electronic device cannot systematically manage media data of an application from a global perspective. As a result, user experience is reduced.

Therefore, how to manage media data of each application in the electronic device is an urgent problem to be resolved currently.

An embodiment of this application provides a data management method. The method is implemented in a unified media framework constructed in embodiments of this application. In this way, in a running process of each application, standardized, unified, and convenient management can be performed on media data through the unified media framework. This resolves problems such as an application silo and data fragmentation.

The data management method provided in embodiments of this application relates to unified management of acquiring, encoding, storing, sharing, decoding, and playing of media data in a process from generation to elimination. This prevents each application from managing media data based on a data management system of each application, breaks a boundary of media data in an application and a device, and improves user experience in using media data.

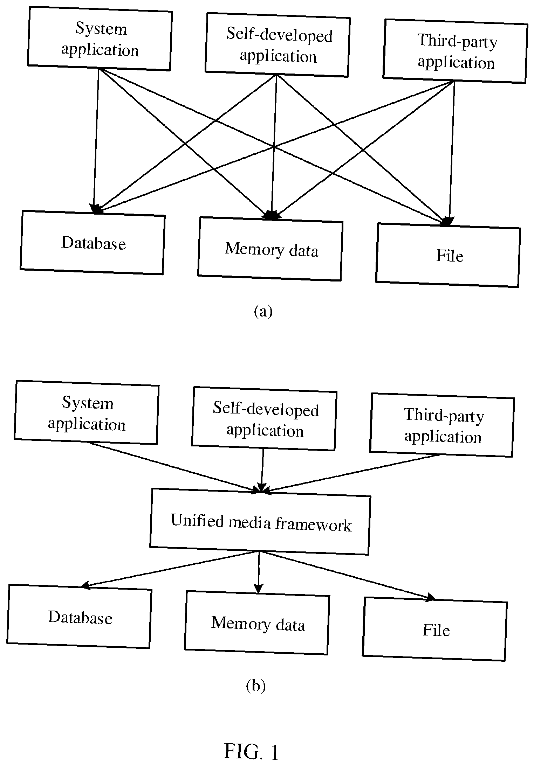

FIG. 1 is a diagram of a difference between a data processing method and a data management method according to an embodiment of this application.
(a) in FIG. 1 is a diagram of a principle of a data processing method, and (b) in FIG. 1 is a diagram of a principle of a data management method according to an embodiment of this application.

As shown in (a) in FIG. 1, any application such as a system application, a self-developed application, or a third-party application may pick a corresponding framework capability based on a service to process media data in a database, memory data, and a file. For example, the system application and the self-developed application separately process the media data in the database through different interface capabilities. It can be learned that the method does not have a unified management strategy for media data of different applications.

As shown in (b) in FIG. 1, any application such as a system application, a self-developed application, or a third-party application uses a unified media framework to implement operations such as production, use, sales, and restoration of media data in a database, memory data, and a file, and provides a unified media data management interface for application development. In addition, a capability of the interface can cover a combination scenario of a single device and a plurality of devices, and provides a unified system framework capability for routing and data display of media data between different applications.

It can be learned that the electronic device provides, through the unified media framework, a capability of processing media data of each application in a unified manner, so that the electronic device can manage the media data of each application in a unified manner. This breaks an application boundary of media data, and provides a logical basis for implementing efficient and smooth cross-application and cross-device sharing of the media data.

The electronic device may be a portable terminal device carrying HarmonyOS, iOS, Android, Microsoft, or another operating system, for example, a mobile phone, a tablet computer, or a wearable device; or may be a non-portable terminal device, for example, a laptop (Laptop) computer having a touch-sensitive surface or a touch panel, or a desktop computer having a touch-sensitive surface or a touch panel. A software system of the electronic device may use a layered architecture, an event-driven architecture, a microkernel architecture, a microservice architecture, or a cloud architecture. In embodiments of this application, HarmonyOS with a layered architecture is used as an example to describe a software structure of an electronic device 100.

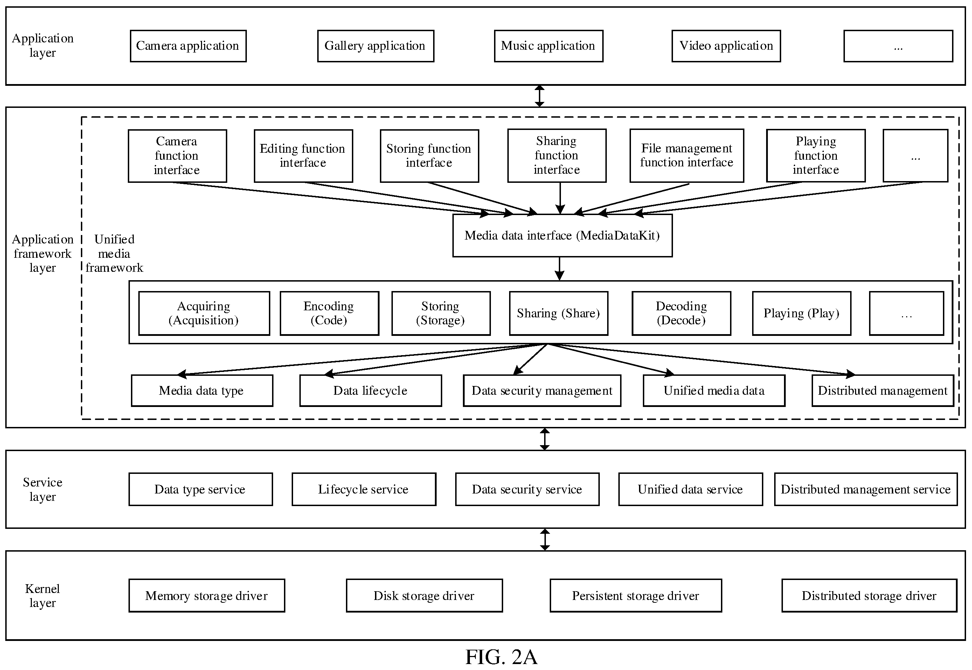

**FIG. 2A** **is a diagram of a software architecture of an electronic device 100 according to an embodiment of this application.**

In a layered architecture, software is divided into several layers, and each layer has a clear role and task. The layers communicate with each other through a software interface. In some embodiments, HarmonyOS is divided into four layers: an application layer, an application framework layer, a service layer, and a kernel layer from top to bottom. An upper layer indicates more interactions with a user, and a lower layer indicates more system capabilities.

It should be understood that the software architecture shown in FIG. 2A is merely an example, and may further include more or fewer modules. This is not limited herein.

The application layer may include a series of application packages, for example, Camera, Calendar, Map, Music, Messaging, Gallery, Communication, Navigation, Bluetooth, Video, and other applications.

As shown in FIG. 2A, the application package may include a camera application, a gallery application, a music application, and a video application. The camera application may be used to acquire media data such as a picture or a video. The gallery application may be used to view, modify, delete, or share a media file such as a picture or a video. The music application may be used to download, play, delete, or share an audio. The video application may be used to download, play, delete, or share a video.

It should be understood that the camera application may be a general term of one or more applications that have a photographing function. In other words, the application package of the electronic device 100 may include one or more camera applications, for example, a system camera application, a self-developed camera application, and a third-party camera application. Other applications such as the gallery application, the music application, and the video application are similar, and details are not described herein again.

The application framework layer provides an application programming interface (application programming interface, API) and a programming framework for an application at the application layer. The application framework layer includes some predefined functions. The application framework layer may further include a window manager, a content provider, a view system, a phone manager, a resource manager, and other modules, which are not described herein.

As shown in FIG. 2A, the application framework layer may include a camera function interface (PhotoMode), an editing function interface (EditMode), a storing function interface (StorageMode), a sharing function interface (ShareMode), a playing function interface (PlayMode), a file management function interface (FileManageMode), and other function interfaces. These function interfaces may be directly invoked by an application at the application layer.

For example, the camera function interface may be an interface (PhotoModeKit), or may be a picker (PhotoModePicker). A plurality of shooting function interfaces may be encapsulated in PhotoModePicker. One shooting function interface may be configured to enable one shooting function. The shooting function may be a shooting function, a video recording function, a night scene function, a portrait function, a large aperture function, a time-lapse photographing function, an artificial intelligence (artificial intelligence, AI) scene recognition function, a code scanning function, a facial recognition function, a facial interaction function, or the like. PhotoModePicker can pick a corresponding interface from the plurality of shooting function interfaces based on a parameter input by an application.

For example, when the electronic device 100 enables portrait photographing through an application having a shooting function, namely, a camera application, the camera application may invoke PhotoModePicker, and transfer a parameter input by the application. For example, if the parameter indicates that a camera used for shooting is a front-facing camera, PhotoModePicker may pick, based on the parameter, a shooting function interface corresponding to a portrait function, to implement the shooting function of the camera application.

It should be understood that other function interfaces such as EditMode and StorageMode are similar to PhotoMode that is described, and details are not described herein again.

It can be learned that the application framework layer may provide a unified interface for a plurality of applications at the application layer to invoke, so that the plurality of applications can implement a same function. For example, both a system camera application and a third-party application can invoke PhotoMode to implement a photographing function. In comparison with a solution in which different applications invoke different interfaces, this resolves a problem of confusing of interfaces invoked during application running.

In addition, the application framework layer may further include a media data interface (MediaDataKit). The media data interface may be invoked by a plurality of function interfaces such as PhotoMode, EditMode, StorageMode, ShareMode, PlayMode and FileManageMode to manage acquiring, encoding, storing, sharing, decoding, playing, and the like of media data.

For example, MediaDataKit may be configured to query, generate, store, delete, synchronize, monitor a change of media data, and the like. Querying media data indicates that MediaDataKit provides a capability of querying media data according to a condition. Generating media data indicates that MediaDataKit provides a capability of generating media data of a specified type. Storing media data indicates that MediaDataKit provides a capability of storing media data. Deleting media data indicates that MediaDataKit provides a capability of deleting media data that meets a specified condition. Synchronizing data indicates that MediaDataKit provides a capability of synchronizing media data end-to-end to ensure consistency of data between devices. Monitoring a change of media data indicates that MediaDataKit provides a capability of monitoring a change of media data of a specified type or a change of specified media data.

In addition, the application framework layer may further include a plurality of capabilities such as normal (normal), acquiring (Acquisition), encoding (Code), storing (Storage), sharing (Share), decoding (Decode), and playing (Play). The plurality of capabilities may be invoked by the media data interface to process media data, including acquiring, encoding, storing, sharing, decoding, and playing the media data, and the like.

Acquiring, encoding, storing, sharing, decoding, or playing media data may be determined by a function enabled by an application. For example, if a function enabled by the camera application is a camera function, an operation performed on media data may include acquiring. For another example, if a function enabled by the video application is a playing function, an operation performed on media data may include playing.

With reference to the software architecture shown in FIG. 2A, when the electronic device 100 detects an operation of viewing a video by a user through the gallery application, the gallery application may invoke the PlayMode interface, and then the PlayMode interface invokes MediaDataKit. MediaDataKit determines, based on PlayMode, that the operation performed on media data is "playing". Therefore, MediaDataKit invokes a playing capability to play the video.

In addition, the application framework layer may further include a plurality of capabilities such as a media data type capability, a data lifecycle capability, a data security management capability, a unified media data capability, and a distributed management capability.

The media data type capability may be used to set a data type of the media data, so that a unified and standard data type can be maintained after media data of each application is processed in a unified manner. The data type may include a text, a picture, an audio, a video, or the like. The media data type capability may be used to determine the data type of the media data based on information input by an application. If the media data type capability is invoked by an acquiring capability, the data type of the media data may be determined based on a data type of media data acquired by an application. For example, if the camera application enables a picture shooting function, the acquiring capability is invoked to implement picture acquiring. It can be learned that the data type of the acquired media data is a picture. Therefore, a unified data type of media data may be set to a picture. Similarly, if the media data type capability is invoked by an encoding capability, the data type of the media data may be determined based on a data type of media data encoded by an application; if the media data type capability is invoked by a storing capability, the data type of the media data may be determined based on a data type of media data stored by an application; if the media data type capability is invoked by a sharing capability, the data type of the media data may be determined based on a data type of media data shared by an application; if the media data type capability is invoked by a decoding capability, the data type of the media data may be determined based on a data type of media data decoded by an application; or if the media data type capability is invoked by a playing capability, the data type of the media data may be determined based on a data type of media data played by an application.

It can be learned that, through the media data type capability, media data of each application can be classified based on a unified and standardized type, so that media data that is of each application and that is with a same attribute is not distributed in a discrete manner. This facilitates unified management of various media data in a system.

The data lifecycle capability may be used to manage a lifecycle of media data. Specifically, the data lifecycle capability may be used to set a validity period of the media data, and process the media data when the validity period of the media data expires. Processing the media data may mean to delete the media data or extend the validity period of the media data. For example, the data lifecycle capability may customize different validity periods for different media data, or perform different management on a lifecycle of media data of different applications on a per-application basis, for example, set the media data to exist permanently, set the media data to be updated periodically, or set the media data to be deleted or its validity period to be extended after expiration.

It can be learned that, through the data lifecycle capability, an entire process from generation to elimination of media data of different applications can be managed in a unified manner, so that the media data of each application can be eliminated according to a unified rule, and generation of junk data in the system is reduced.

The data security management capability may be used to manage security of media data in a unified manner, including checking rationality, compliance, and validity of the media data, managing a validity period of the media data, and the like. For example, the data security management capability may be used to verify whether content of the media data complies with a preset regulation. If the content complies with the preset regulation, it indicates that the media data is secure; or if the content does not comply with the preset regulation, it indicates that the media data has a security risk.

It can be learned that, through the data security management capability, security of the media data of each application can be managed according to a unified rule. This improves security of using the media data by a user, and reduces a risk of media data leakage, emergence of non-compliant information, or the like.

The unified media data capability may be used to provide a standardized data model and a standard model parameter, to implement unification and standardization of media data. The data model may be used to standardize a function initiated by an application and media data processed by using the function or indication information of the media data. The data model may include a parameter of the function and the media data or the indication information of the media data. For example, if a parameter input by an application is a null value, the data model may be set to supplement the parameter in the data model. For example, if a parameter in the parameter input by the application is a null value, an operating system may use a default value to supplement the parameter. The standard model parameter may include a specific value of a parameter included in the standardized data model. For example, if the parameter input by the application includes music duration, and the duration is a negative number, it indicates that the model parameter is not standard, and a value of the parameter needs to be adjusted again.

It can be learned that, through the unified media data capability, media data transferred when each application enables a function can be unified and standardized, so that the media data of each application can maintain a unified and standardized data format. This resolves a problem of data fragmentation between applications and between devices, and lays a foundation for smooth data sharing between the applications and between the devices.

The distributed management capability may be used to perform distributed management on media data, to synchronize media data between applications and between devices, and manage cross-application and cross-device sharing of media data. Specifically, the distributed management capability may be used to provide a capability of processing media data on another application or another device. The another device may be a device that is logged in with a same account as the electronic device 100. For example, if an application invokes the storing function interface to store media data, and the media data cannot be stored at a local end due to insufficient storage space at the local end, the media data may be stored at a remote end by invoking the distributed management capability. For example, the distributed management capability may implement cross-device synchronization of media data based on a relational database (relational database, RDB). The RDB is a relational database, and is a way of organizing data by using a database. In addition, during cross-device sharing of media data, the distributed management capability may be used to determine a device that stores the media data.

It can be learned that, through the distributed management capability, a boundary of media data between the applications and between the devices can be broken, thereby implementing convenient and smooth sharing of media data among a plurality of applications and among a plurality of devices.

The unified media framework provided in embodiments of this application may include all interfaces and capabilities at the application framework layer shown in FIG. 2A. In other embodiments of this application, the unified media framework and the interfaces or the capabilities described above may have other names. This is not limited in embodiments of this application. For example, the unified media framework may also be referred to as a unified media management framework. In addition, in the unified media framework, function interfaces that can be directly invoked by an application may be more or less than the function interfaces shown in FIG. 2A, and capabilities that are invoked downward by the media data interface may be more or less than the capabilities shown in FIG. 2A. This is not limited in embodiments of this application.

It can be learned that, in the unified media framework provided in embodiments of this application, interfaces and services are layered, so that application developers only need to pay attention to functions provided by the interfaces, and do not need to pay attention to complex implementation of underlying commands. In addition, each application can invoke a same interface provided in the unified media framework to implement a same function, thereby quickly, efficiently, and conveniently managing media data between different applications, media data between different devices, and media data of different types.

As shown in FIG. 2A, the service layer may include a data type service, a lifecycle service, a data security service, a unified data service, a distributed management service, and the like. The data type service may be used to provide related service logic to standardize a media data type. The lifecycle service may be used to provide related service logic to manage a media data lifecycle. The data security service may be used to provide related service logic to manage media data security. The unified data service may be used to provide related service logic to unify media data. The distributed management service may be used to provide related service logic to perform distributed management on media data.

The kernel layer is a layer between hardware and software. The kernel layer may include a display driver, a camera driver, an audio driver, a sensor driver, and the like. As shown in FIG. 2A, the kernel layer may include a memory storage driver, a disk storage driver, a persistent storage driver, and a distributed storage driver. Memory storage is a storage manner of storing media data in a memory. Disk storage is a storage manner of storing media data in a disk. Persistent storage is a storage manner of storing instantaneous data in a memory as persistent data, for example, storing data in a database or a hard disk drive, to avoid data loss after a device is powered off or an application exits. Distributed storage is a storage manner of storing media data across devices.

It may be understood that the unified media framework provided in this application may be implemented as a system capability, or may be implemented as a software development kit (software development kit, SDK), a resident service, a binary shared object (shared object, SO) file, or the like. The resident service may be considered as a resident process, and is always activated after the electronic device is powered on.

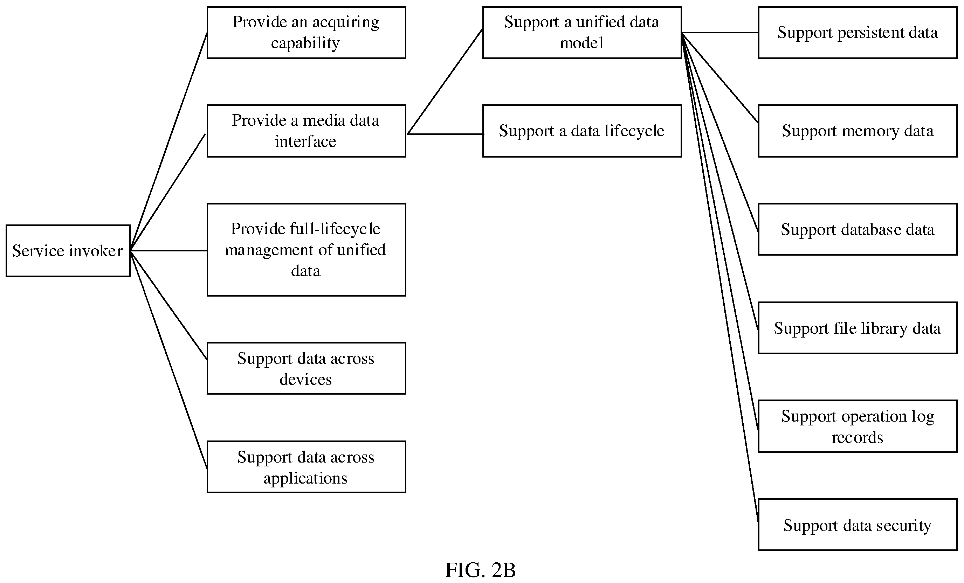

FIG. 2B shows a relationship between modules in the software architecture shown in FIG. 2A by using an example in which processing performed on media data is acquiring.

As shown in FIG. 2B, a service invoker may be an application at the application layer shown in FIG. 2A, for example, a camera application, a gallery application, a music application, or a video application.

If the service invoker initiates service invoking, where the service invoking is used to acquire media data, a software framework needs to provide the acquiring capability, the media data interface, full-lifecycle management of unified data, support of cross-device data, and support of cross-application data in an entire service invoking process. The cross-device data and the cross-application data may be processed through the distributed management capability in the software architecture shown in FIG. 2A.

In addition, the media data interface needs to be capable of supporting a unified data model and managing a data lifecycle. The unified data model may be provided through the unified media data capability shown in FIG. 2A, and the data lifecycle may be managed through the data lifecycle capability shown in FIG. 2A.

Further, the unified data model needs to consider various features and types of data. The type may include a database, memory data, a file, and the like. Therefore, the unified data model needs to be provided for persistent data, memory data, database data, file library data, and other data to unify and standardize different types of media data, and ensure unification of data sharing between applications. In addition, the unified data model also needs to support data security, so that security of the media data can be managed through the data security management capability shown in FIG. 2A.

It should be understood that, when processing such as encoding, storing, sharing, decoding, or playing is performed on the media data, factors that need to be considered in a service invoking process are similar to those described in FIG. 2B. Details are not described herein again.

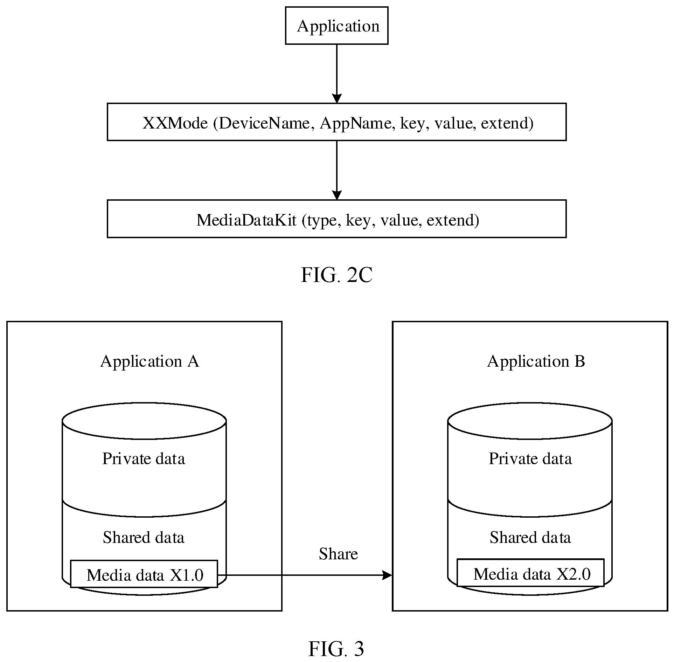

To better understand an invoking relationship of interfaces at each layer in the software architecture shown in FIG. 2A, FIG. 2C shows an example of a diagram of an interface invoking relationship.

As shown in FIG. 2C, the application may be the camera application, the gallery application, the music application, the video application, or the like that is at the application layer and that is mentioned in FIG. 2A. XXMode may be any function interface mentioned in FIG. 2A, for example, the camera function interface (PhotoMode), the editing function interface (EditMode), the storing function interface (StorageMode), the sharing function interface (ShareMode), the playing function interface (PlayMode), or the file management function interface (FileManageMode). MediaDataKit is the media data interface.

The application may detect a user operation, and trigger enabling of a specific function. The function may be used to perform one or more of the following processing on media data: acquiring, encoding, storing, sharing, decoding, and playing.

In this case, after detecting the user operation, the application may invoke the XXMode interface. For example, if the camera application detects a photographing operation, the XXMode interface may be a PhotoMode interface; and if the video application detects a video playing operation, the XXMode interface may be a PlayMode interface.

A format of the XXMode interface is XXMode (DeviceName, AppName, key, value, extend).

The device name (DeviceName) may be a device name of a local device or a device name of a remote device. If the device name is the device name of the local device, the local device may enable a corresponding function in response to the operation detected by the application. If the device name is the device name of the remote device, the remote device may enable a corresponding function in response to the operation detected by the application.

The application name (AppName) may be a name of an application that invokes the XXMode interface.

The parameter (key, value) input by the application includes one or more parameters input by the application after the application detects the user operation. For example, if the user operation is a file creation operation, the parameter input by the application may include a file name, an owner, and the like of a file.

The parameter input by the application may exist in a format of a parameter (key)-parameter content (value). The parameter (key) is a parameter of the function enabled by the application, and indicates the function enabled by the application. For example, the parameter may be a name, an identifier, an index, a number, or the like of the function enabled by the application. The parameter content (value) represents data for implementing the function enabled by the application, and may include one or more of the following: description information of the function enabled by the application, the media data, and indication information of the media data.

The key and the value may constitute one key-value pair. One key may correspond to one or more values. A key and a value transferred in the XXMode interface may include one or more pairs, for example, key1, value1, key2, and value2.

For example, if the function enabled by the application includes a facial recognition function, data required by the facial recognition function may include one or more of the following: coordinate information of a face, an image of the face, and the like. For another example, if the function enabled by the application includes a beautification function, data required by the beautification function may include one or more of the following: a beautification level, face information, and the like. For another example, if the function enabled by the application includes a camera enabling function, data required by the camera enabling function may include camera information. The camera information indicates a camera to be enabled in a device, for example, a front-facing camera, a rear-facing camera, a long-focus camera, or a wide-angle camera.

The extension field (extend) may be used to embed a capability or build a differentiated capability.

It may be understood that the device name, the application name, and the extension field are optional.

After the application invokes the XXMode interface, the XXMode interface may invoke MediaDataKit. An interface format of MediaDataKit is MediaDataKit (type, key, value, extend).

The type (type) indicates a type of processing performed on media data. The type may include but is not limited to the following: normal (normal), acquiring (Acquisition), encoding (code), storing (storage), sharing (share), decoding (decode), playing (play), and others (other). The type may be determined based on a previous interface of MediaDataKit that is invoked. For example, if the previous interface is a PhotoMode interface, the electronic device may determine that a photographing function needs to be enabled currently to acquire the media data. Therefore, the type is considered as an acquiring type.

The indication parameter (key) of a function point indicates a point of an enabled function, and may be obtained from a parameter input by the XXMode interface, or may be determined based on a name of the XXMode interface.

The value (value) required by a function point indicates data for implementing the function point, and may be obtained from the parameter input by the XXMode interface. If the value cannot be obtained from the parameter input by the XXMode interface, the value may be determined by the operating system.

The extension field (extend) may be used to embed a capability or build a differentiated capability.

After the MediaDataKit interface is invoked, another interface provided by the framework layer can continue to be invoked downward based on the type (type). For example, if the type (type) is acquiring, the acquiring capability may be invoked to acquire media data; if the type (type) is encoding, the encoding capability may be invoked to encode media data, if the type (type) is storing, the storing capability may be invoked to store media data; if the type (type) is sharing, the sharing capability may be invoked to share media data; if the type (type) is decoding, the decoding capability may be invoked to decode media data; or if the type (type) is playing, the playing capability may be invoked to play media data. A parameter transferred by a capability such as acquiring, encoding, storing, sharing, decoding, or playing may include key, value, and extend.

In a process in which any capability such as acquiring, encoding, storing, sharing, decoding, or playing is invoked, a plurality of capabilities such as a unified media data capability, a media data type capability, a data lifecycle capability, a data security management capability, and a distributed management capability may be further invoked to standardize and unify the media data. The media data type capability may be used to determine a data type of the media data. The data lifecycle capability may be used to determine a lifecycle of the media data. The data security management capability may be used to manage security of the media data. The unified media data capability may be used to standardize a data model of the media data, where the data model is an indication parameter (key) of a function point and a value (value) required by the function point. The distributed management capability may be used to provide distributed management for the media data.

In some implementations, in a process in which any capability such as acquiring, encoding, storing, sharing, decoding, or playing is invoked, only some of a plurality of capabilities such as a unified media data capability, a media data type capability, a data lifecycle capability, a data security management capability, and a distributed management capability may be invoked, which may be specifically determined by the application. For example, if the application does not need to set the lifecycle of the media data, the data lifecycle capability does not need to be invoked.

In some implementations, after the XXMode interface is invoked, MediaDataKit may be bypassed, and another framework layer capability at a lower layer of MediaDataKit may be directly invoked, to implement the function enabled by the application.

In some implementations, the XXMode interface may be a kit, or may be a picker (picker). When the XXMode interface is implemented as a picker, MediaDataKit may be further correspondingly refined into a plurality of interfaces with more detailed functions. In this way, the XXMode interface may pick an appropriate interface from the plurality of interfaces for invoking.

After an interface at the framework layer is invoked, interfaces at the service layer and the kernel layer continue to be invoked downward, to implement a corresponding shooting function.

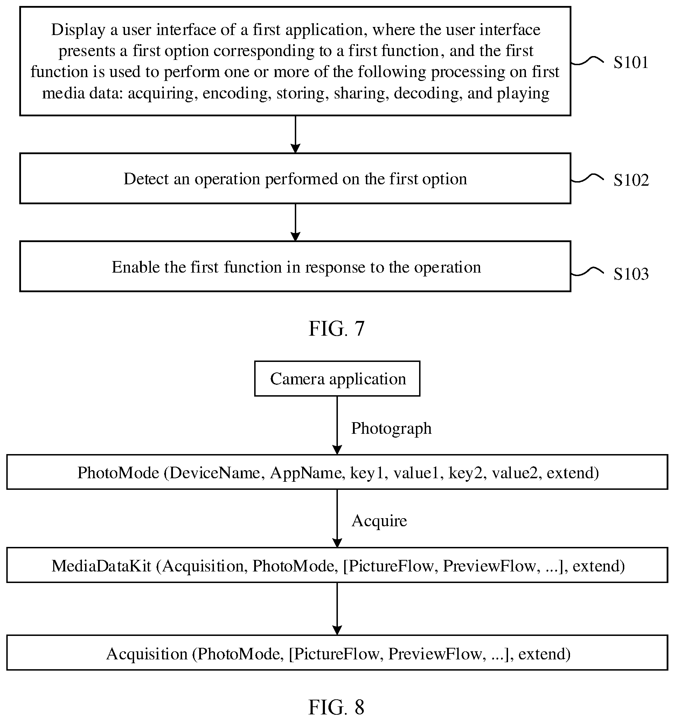

For a specific detailed example of FIG. 2C, refer to FIG. 8 to FIG. 12 subsequently.

Based on different application scenarios, the unified media framework provided in embodiments of this application may be implemented by using any one of the following mechanisms.

### (1) Access Mechanism

The access mechanism indicates that an application may proactively access MediaDataKit provided by the unified media framework to implement processing on media data, for example, acquiring, encoding, storing, sharing, decoding, and playing.

In this way, the media data may be managed in a unified manner through a unified interface provided by the unified media framework. In addition, as long as the application processes the media data by using the access mechanism, this part of data belongs to data that the application opens to another application for use, and the another application may obtain and use the media data through the unified media framework, to implement sharing of media data between applications.

### (2) Delegation mechanism

The delegation mechanism indicates that an application does not originally access MediaDataKit provided by the unified media framework to acquire, encode, store, share, decode, and play media data. The media data of the application is not originally data that is unified and standardized through the unified media framework. Therefore, whether to parse and reconstruct this part of media data into the data that is unified and standardized through the unified media framework may be determined based on whether the application consents.

If the application consents, the media data of the application may be parsed and reconstructed into the data that is unified and standardized through the unified media framework. In this way, this part of media data may be reassembled into data that can be recognized and used by another application. This part of media data may be considered as data that is opened by the application to the another application for use. The another application may obtain and use the media data through the unified media framework, to implement sharing of media data between applications. If the application does not consent, the media data of the application cannot be parsed and reconstructed into the data that is unified and standardized through the unified media framework, and another application cannot use this part of media data through the unified media framework.

### (3) Dynamic mechanism

The dynamic mechanism is a mechanism introduced to ensure security of media data and prevent an application from excessively opening or sharing the media data. In the dynamic mechanism, media data may be opened and shared between applications in a query-response manner. When an application (referred to as an application A below) needs to use media data of another application, whether there is an application that can share media data may be queried through the unified media framework. When there is an application (referred to as an application B below) that can share the media data, the application B may respond to the query request through the unified media framework, and open the media data of the application B, so that the application A can use the media data, to implement data sharing between applications. In addition, the media data opened this time is only for a query of the application A this time. When the application A or another application needs to use the media data again next time, the application B needs to be queried again in a "query-response" manner.

In this way, for media data between applications, the applications need to complete data sharing between the applications in a "query-response" manner.

For example, to better understand the three mechanisms, FIG. 3 to FIG. 6 each show an example of a principle of data sharing between applications in different mechanisms.

**FIG. 3** **is a diagram of a principle of data sharing between applications in an existing mechanism.**

As shown in FIG. 3, data in an application may be usually classified into private data and shared data. The private data is data used inside the application, and cannot be accessed or used by another application. The shared data is data that can be accessed and used by the another application.

In the existing mechanism, each application has a data management system to manage its own media data. It is assumed that shared data of an application A includes media data X1.0. If an application B expects to access and use the media data X1.0, in the existing mechanism, the application B usually saves the media data X1.0 as media data X2.0. Processing performed by the application A on media data X is processing performed on the media data X1.0, and processing performed by the application B on the media data X is processing performed on media data X2.0. For example, if the application A initiates deletion of the media data X, the application A can only delete the media data X1.0 in an application directory of the application A, and does not delete the media data X2.0 in an application directory of the application B. Similarly, if the application B initiates deletion of the media data X, the application B can only delete the media data X2.0 in the application directory of the application B, and does not delete the media data X1.0 in the application directory of the application A.

It can be learned that, in the existing mechanism, media data between applications is independent, isolated, and not unified. As a result, operations such as management, viewing, adding, deletion, and modification performed by a user on the media data are complex and fragmented, and smooth and simple data sharing cannot be implemented between applications.

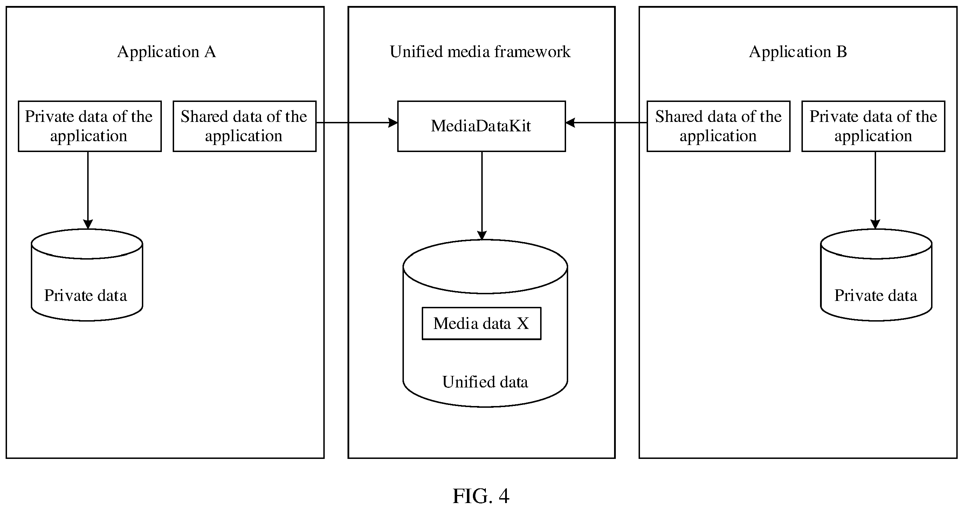

**FIG. 4** **is a diagram of a principle of data sharing between applications in an access mechanism according to an embodiment of this application.**

As shown in FIG. 4, both an application A and an application B may implement unified management of shared data by accessing a unified media framework. When the application A or the application B processes media data, as long as MediaDataKit is accessed, media data of different applications may have a same data format, and have a unified media framework for unified management. The media data may be referred to as unified data.

Media data X included in the unified data is used as an example. If the media data X is media data processed after the application A accesses MediaDataKit, the media data is data that the application A opens to another application for use, and the another application, for example, an application B, may also access and use the media data X by accessing MediaDataKit.

For example, it is assumed that the application A is a camera application, the application B is a video call application, and the media data X is an image preview flow acquired by the application A. When the application B enables a video call function, a camera also needs to be enabled to acquire an image preview flow. Therefore, in a process in which the application A acquires the image preview flow, the application B may directly use the image preview flow acquired by the application A, to implement sharing of media data between applications. In this way, the electronic device can simultaneously run two applications that need to use a camera, thereby improving user experience.

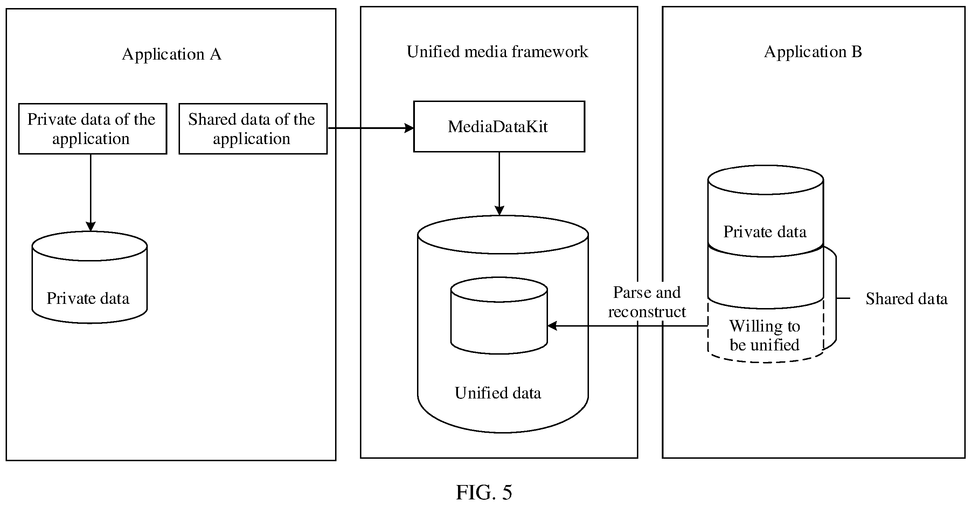

**FIG. 5** **is a diagram of a principle of data sharing between applications in a delegation mechanism according to an embodiment of this application.**

In consideration of that, in a running process of an application, media data does not need to be processed through a unified media framework. In this case, for the media data of the application, a data management system of the application may still be used to manage the media data.

As shown in FIG. 5, an application A is an application that processes media data through the unified media framework, and an application B is not an application that processes media data through the unified media framework.

In the delegation mechanism, if data that is willing to be unified exists in shared data of the application B when the application B consents, this part of data that is willing to be unified may be parsed and reconstructed, and converted into data in a same format as unified data, that is, reassembled into data that can be recognized and used by another application. In this way, the another application such as the application A that processes the media data through the unified media framework may access and use this part of data by accessing MediaDataKit.

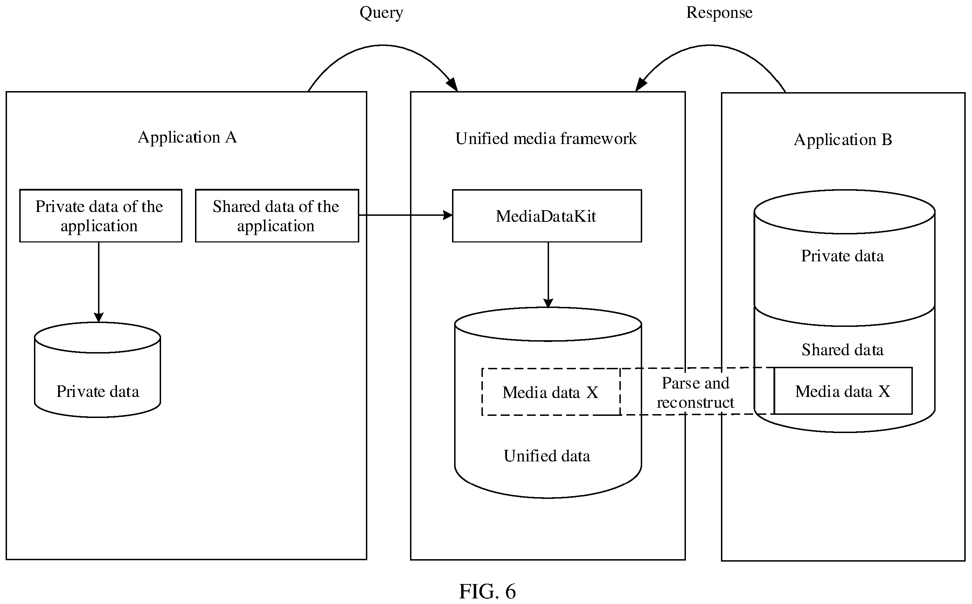

**FIG. 6** **is a diagram of a principle of data sharing between applications in a dynamic mechanism according to an embodiment of this application.**

As shown in FIG. 6, an application A is an application that processes media data through a unified media framework, and an application B is not an application that processes media data through a unified media framework.

In the dynamic mechanism, when the application A expects to use media data of another application, the application A may send a query request to the unified media framework to request the media data of the another application, and the unified media framework then sends the query request to the another application. If there is an application B that responds, the application B may establish a dynamic channel with the application A to temporarily open sharing of media data X. The unified media framework may parse and reconstruct the media data X on the dynamic channel, and convert the media data X into data in a same format as unified data. In this way, on the dynamic channel, the application A may access and use the media data X by accessing MediaDataKit. In addition, after sharing ends, the dynamic channel is closed. When the application A or another application expects to use the media data X again, a dynamic channel needs to be established again in a query-response manner.

For example, if the application A is a camera application on a device A, and the application B is a camera application on a device B, when the camera application on the device A expects to use media data acquired by a camera application on another device, the camera application on the device A may send a query request to the unified media framework. If the camera application on the device B responds, the camera application on the device A may access media data acquired by the camera application on the device B.

In some implementations, the application B may be an application that processes media data through the unified media framework. In this case, it is equivalent to that, based on the access mechanism, before cross-application access to the media data, permission of an application to access the media data needs to be obtained in a query-application manner.

It may be understood that the application A and the application B mentioned in FIG. 4 to FIG. 6 above may be different applications on a same device. For example, the application A and the application B are respectively a camera application and a gallery application on a same device. Alternatively, the application A and the application B may be applications on different devices. For example, the application Ais a camera application on the device A, and the application B is a camera application or a gallery application on the device B. It can be learned that the unified media framework provided in embodiments of this application can implement smooth and simple sharing of media data between different applications on a same device, and can also implement smooth and simple sharing of media data on different devices. This breaks a boundary of media data between applications and between devices, and provides a data sharing platform between the applications and between the devices.

**FIG. 7** **is a schematic flowchart of a data management method according to an embodiment of this application.**

As shown in FIG. 7, the data management method mainly includes the following steps.

**S101:** An electronic device 100 displays a user interface of a first application, where the user interface presents a first option corresponding to a first function, and the first function is used to perform one or more of the following processing on first media data: acquiring, encoding, storing, sharing, decoding, and playing.

A first operating system runs on the electronic device 100, the first application runs on the first operating system, and the first operating system provides a first interface, a media data interface, a second capability, and a third capability.

For example, the first application may be a third-party application, and the first application includes program code for invoking the first interface. For example, the first application may be a camera application, a gallery application, a music application, a video application, or the like.

The first media data may include one or more of the following: a text, a picture, a video, an audio, and the like.

The first function may be a photographing function, a picture viewing function, a music playing function, a file creation function, a file deletion function, or the like. For example, if the first function is a photographing function, the user interface of the first application may be a photographing interface, the first option may be a photographing option, the first media data may include a picture, and the first function may include picture acquiring.

The first interface may be configured to enable the first function provided by the first application, and the first interface may be configured to invoke the media data interface. In this embodiment of this application, the first operating system may provide a plurality of first interfaces, and different first interfaces may be configured to enable different functions.

The media data interface encapsulates the second capability, and the second capability includes a capability of performing one or more of the following processing on media data: acquiring, encoding, storing, sharing, decoding, and playing.

With reference to FIG. 2A, the first interface may be the camera function interface, the editing function interface, the storing function interface, the sharing function interface, the file management function interface, or the playing function interface mentioned in FIG. 2A, and the second capability may include one or more of the acquiring capability, the encoding capability, the storing capability, the sharing capability, the decoding capability, and the playing capability mentioned in FIG. 3.

The second capability includes the third capability, and the third capability includes a capability of performing one or more of the following processing on the media data: setting a data type of the media data, managing a lifecycle of the media data, managing security of the media data, setting a data model of the media data, and performing distributed management on the media data.

For example, the third capability may include one or more of the following: a unified media data capability, a data lifecycle capability, a data security interface, a unified media data capability, and a distributed management capability.

For detailed descriptions of the interfaces and the capabilities that are included in the first operating system, refer to the related content in FIG. 2A.

**S102:** The electronic device 100 detects an operation performed on the first option.

The operation may be used to trigger enabling of the first function. The operation may be a touch operation performed on a touchscreen, a voice instruction of a user, or the like. A form of the operation is not limited in embodiments of this application.

It may be understood that, in addition to enabling a function through an operation performed on an option, the electronic device 100 may enable an application function based on the voice instruction of the user or an operation performed on a physical button, when no picture is displayed. For example, the electronic device 100 may detect, in a screen-off state, a voice instruction "start a camera" of the user, start a camera application, and enable a photographing preview function of the camera application. The photographing preview function may be used to capture a preview flow.

**S103:** The electronic device 100 enables the first function in response to the operation.

For example, that the electronic device 100 enables the first function specifically includes: The electronic device 100 invokes the first interface through the first application, invokes the media data interface through the first interface, invokes one or more capabilities in the second capability through the media data interface, and then invokes the third capability in a process of running the one or more capabilities in the second capability.

The first function is used to perform one or more of the following processing on the first media data. In a process of enabling the first function, the third capability is used to perform one or more of the following: setting a data type of the first media data, managing a lifecycle of the first media data, managing security of the first media data, setting a data model of the first media data, and performing distributed management on the first media data.

A parameter input by the first interface may include one or more of the following: a device name, an application name of the first application, a parameter input by the first application, and the like. The parameter input by the first application may be a parameter of the first function and parameter content. The parameter content includes one or more of the following: description information of the first function, the first media data, and indication information of the first media data.

It should be noted that, if the electronic device 100 enables a plurality of functions in response to the operation performed on the first option, the parameter input by the first application may include a plurality of key-value pairs. One key-value pair may be used to describe a function and related information of the function.

It can be learned that, when invoking the first interface, the first application may transfer device information, application information, and related information of the enabled first function to the first interface. The related information of the first function may include the parameter of the first function, and may further include the first media data, or the information indicating the first media data. For example, if the first media data is a picture, the indication information of the first media data may include an address, a name, a size, and the like of the picture.

The device name may be a name of the electronic device 100. It may be understood that, if the electronic device 100 cannot enable the first function, and determines that another electronic device can enable the first function in response to the operation, the device name may be a name of the another electronic device.

For example, if the first function includes a facial recognition function, the parameter input by the first application includes a name, an identifier, an index, code, or the like of the facial recognition function, coordinates of a face, an image of the face, and the like. The name, the identifier, the index, or the code of the facial recognition function is a parameter of the facial recognition function, and the coordinates of the face and the image of the face are parameter content. If the first function includes a beautification function, the parameter input by the first application includes a name, an identifier, an index, code, or the like of the beautification function, a beautification level, face information, and the like. The name, the identifier, the index, the code, or the like of the beautification function is a parameter of the beautification function, and the beautification level and the face information are parameter content.

A parameter input by the media data interface may include capability indication information, the parameter of the first function, and the first media data or the indication information of the first media data.

The capability indication information may indicate a capability invoked by the media data interface in the second capability. For example, the capability indication information may be determined based on the first interface. For example, if a capability invoked downward by the media data interface is an encoding capability, the capability indication information may indicate an encoding capability.

It should be noted that, when the first interface invokes the media data interface, some parameters input by the first application may be null values. Therefore, the first operating system may automatically supplement these parameters with default parameters. Therefore, in the parameter input by the media data interface, the indication information of the first media data may be all or some parameters input by the first application, and/or the indication information of the first media data is determined by the first operating system.

A parameter input by the second capability may include the parameter of the first function and the first media data or the indication information of the first media data.

It can be learned that the parameter input by the second capability may be a part of the parameter input by the media data interface. For specific descriptions of the parameter input by the second capability, refer to related descriptions in the parameter input by the media data interface. Details are not described herein again.

The following describes, with reference to different examples when the electronic device 100 enables different functions, an interface invoking relationship in an operating system and parameters transferred between interfaces.

**Example 1:** The first function is a photographing function.

FIG. 8 is a diagram of interface invoking in an operating system when an electronic device 100 implements a photographing function through a camera application according to an embodiment of this application.

As shown in FIG. 8, after the camera application detects an operation of enabling the photographing function by a user, the camera application may invoke a PhotoMode interface. A parameter transferred by the PhotoMode interface includes DeviceName, AppName, key1, value1, key2, value2, and extend.

After the camera application invokes the PhotoMode interface, the PhotoMode interface invokes MediaDataKit. A parameter transferred by MediaDataKit includes Acquisition, PhotoMode, [PictureFlow, PreviewFlow, ...], and extend.

Acquisition indicates an acquiring capability, and Acquisition is determined based on the PhotoMode interface. PhotoMode indicates a photographing function, and PhotoMode may be determined based on an interface name of the PhotoMode interface, or may be determined based on the parameters key1, value1, key2, and value2 transferred by the PhotoMode interface. PictureFlow is a photographing flow, and is used to store data of photographing results; and PreviewFlow is a preview flow, and is used to display preview data to the user in real time. PhotoMode and [PictureFlow, PreviewFlow, ...] are one key-value pair, and [PictureFlow, PreviewFlow, ...] is media data processed in a process in which the camera application enables the photographing function.

It may be understood that PictureFlow and PreviewFlow may be determined by the first operating system.

After the PhotoMode interface invokes MediaDataKit, MediaDataKit may determine, based on the parameter Acquisition transferred by MediaDataKit, that a capability to be invoked is an acquiring capability. A parameter transferred by the acquiring capability may include PhotoMode, [PictureFlow, PreviewFlow, ...], and extend.

Then, in a process of running the acquiring capability, one or more of a media data type capability, a data lifecycle capability, a data security management capability, a unified media data capability, and a distributed management capability may be invoked to standardize a format of media data. For example, the media data type capability is invoked to determine that a data type of the media data is a picture.

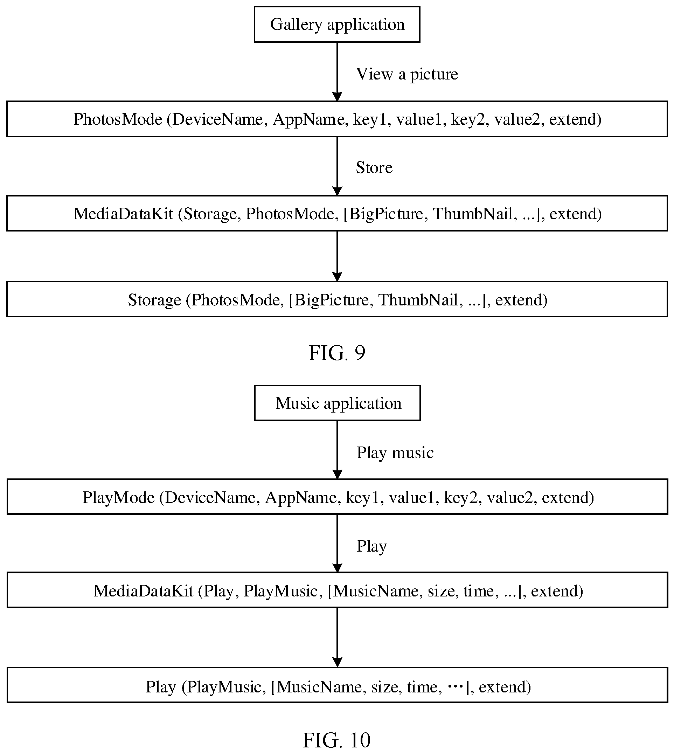

It may be understood that FIG. 8 is merely an example. For example, in addition to the camera application shown in FIG. 8, another application having a photographing function, for example, an instant chat application, may also trigger the photographing function based on a user operation. The parameter input by MediaDataKit may include more or fewer parameters than those shown in FIG. 8. Subsequent FIG. 9 to FIG. 12 are merely examples, and details are not described below again.

It can be learned from FIG. 8 that, if the first function is the photographing function, the first media data may include one or more of the following in the parameter input by the media data interface: the photographing flow and the preview flow, and the capability indication information may indicate a capability of acquiring the first media data in the second capability.

**Example 2:** The first function is a picture viewing function.

FIG. 9 is a diagram of interface invoking in an operating system when an electronic device 100 implements a picture viewing function through a gallery application according to an embodiment of this application.

As shown in FIG. 9, after the gallery application detects an operation of viewing a picture by a user, the gallery application may invoke a PhotosMode interface. A parameter transferred by the PhotosMode interface includes DeviceName, AppName, key1, value1, key2, value2, and extend.

For specific descriptions of the parameter transferred by the PhotosMode interface, refer to the related content in FIG. 8. Details are not described herein again.

After the camera application invokes the PhotoMode interface, the PhotoMode interface invokes MediaDataKit. A parameter transferred by MediaDataKit includes Storage, PhotosMode, [BigPicture, ThumbNail, ...], and extend.

Storage indicates a storing capability, PhotosMode indicates a picture viewing function, BigPicture indicates a big picture, and ThumbNail indicates a thumbnail. PhotosMode and [BigPicture, ThumbNail, ...] constitute one key-value pair. In addition, BigPicture and ThumbNail are media data processed in a process in which the gallery application enables the picture viewing function.

After the PhotosMode interface invokes MediaDataKit, MediaDataKit may determine, based on the parameter Storage transferred by MediaDataKit, that an interface to be invoked is a storing capability. A parameter transferred by the storing capability may include PhotosMode, [BigPicture, ThumbNail, ...], and extend.

Then, in a process of running the storing capability, one or more of a media data type capability, a data lifecycle capability, a data security management capability, a unified media data capability, and a distributed management capability may be invoked to standardize a format of media data.

It can be learned from FIG. 9 that, if the first function is the picture viewing function, the indication information of the first media data in the parameter input by the media data interface may include one or more of the following: the big picture and the thumbnail, and the capability indication information may indicate a capability of storing the first media data in the second capability.

**Example 3:** The first function is a music playing function.

FIG. 10 is a diagram of interface invoking in an operating system when an electronic device 100 implements a music playing function through a music application according to an embodiment of this application.

As shown in FIG. 10, after the music application detects an operation of playing music by a user, the music application may invoke a PlayMode interface. After the music application invokes the PlayMode interface, the PlayMode interface invokes MediaDataKit. A parameter transferred by MediaDataKit includes Play, PlayMusic, [MusicName, size, time, ...], and extend.

Play indicates a playing capability to be invoked by MediaDataKit, PlayMusic indicates a music playing function, and [MusicName, size, time, ...] indicates music to be played by using a current music playing function. MusicName indicates a music name, size indicates a music size, and time indicates music duration.

After the PlayMode interface invokes MediaDataKit, MediaDataKit invokes the playing capability. A parameter transferred by the playing capability includes PlayMusic, [MusicName, size, time, ...], and extend.

Then, in a process of running the playing capability, one or more of a media data type capability, a data lifecycle capability, a data security management capability, a unified media data capability, and a distributed management capability may be invoked to standardize a format of media data.

It can be learned from FIG. 10 that, if the first function is the music playing function, the first media data is the music, the indication information of the first media data in the parameter input by the media data interface may include one or more of the following: the music name, the music size, and the music duration, and the capability indication information may indicate a capability of playing the first media data in the second capability.

**Example 4:** The first function is a file creation function or a file deletion function.

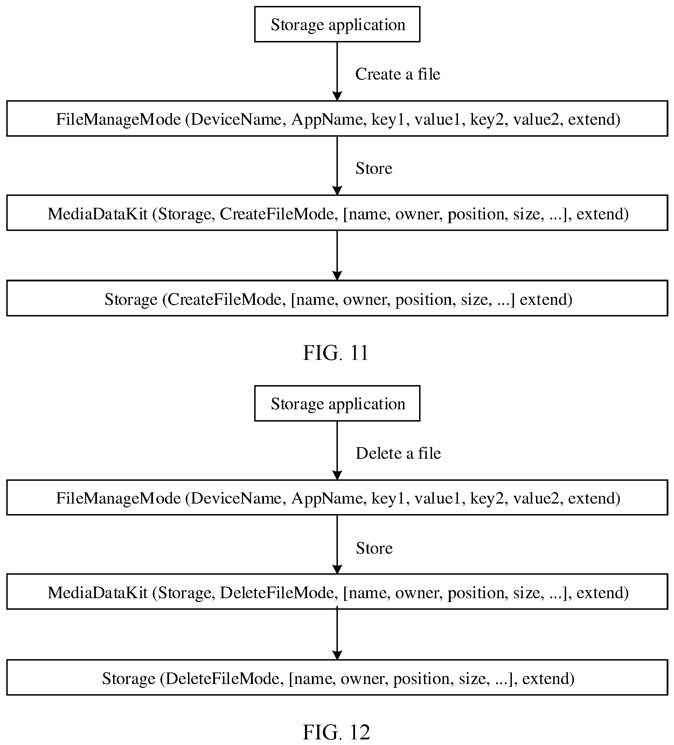

FIG. 11 is a diagram of interface invoking in an operating system when an electronic device 100 implements a file creation function through a storage application according to an embodiment of this application.

As shown in FIG. 11, after the storage application detects a file creation operation of a user, the storage application may invoke a FileManageMode interface. Then, the FileManageMode interface invokes MediaDataKit. A parameter transferred by MediaDataKit includes Storage, CreateFileMode, [name, owner, position, size, ...], and extend.

For example, the storage application may be a file management application. This is not limited in embodiments of this application.

Storage indicates a storing capability to be invoked by MediaDataKit, CreateFileMode indicates a file creation function, and [name, owner, position, size, ...] indicates a file to be created by using a current file creation function. name indicates a file name, owner indicates a file owner, position indicates a file path, and size indicates a file size.

After the FileManageMode interface invokes MediaDataKit, MediaDataKit invokes the storing capability. A parameter transferred by the storing capability includes CreateFileMode, [name, owner, position, size, ...], and extend.

Then, in a process of running the storing capability, one or more of a media data type capability, a data lifecycle capability, a data security management capability, a unified media data capability, and a distributed management capability may be invoked to standardize a format of media data.

FIG. 12 is a diagram of interface invoking in an operating system when an electronic device 100 implements a file deletion function through a storage application according to an embodiment of this application.

As shown in FIG. 12, after the storage application detects a file deletion operation of a user, the storage application may invoke a FileManageMode interface. Then, the FileManageMode interface invokes MediaDataKit. A parameter transferred by MediaDataKit includes Storage, DeleteFileMode, [name, owner, position, size, ...], and extend.

Storage indicates a storing capability to be invoked by MediaDataKit, DeleteFileMode indicates a file deletion function, and [name, owner, position, size, ...] indicates a file to be deleted by using a current file deletion function. name indicates a file name, owner indicates a file owner, position indicates a file path, and size indicates a file size.

After the FileManageMode interface invokes MediaDataKit, MediaDataKit invokes the storing capability. A parameter transferred by the storing capability includes DeleteFileMode, [name, owner, position, size, ...], and extend.

Then, in a process of running the storing capability, one or more of a media data type capability, a data lifecycle capability, a data security management capability, a unified media data capability, and a distributed management capability may be invoked to standardize a format of media data.

It can be learned from FIG. 11 and FIG. 12 that, if the first function is the file creation function or the file deletion function, the first media data is the file, the indication information of the first media data in the parameter input by the media data interface may include one or more of the following: the file name, the file owner, the file path, and the file size, and the capability indication information may indicate a capability of storing the first media data in the second capability.

For specific content not described in detail in FIG. 9 to FIG. 12, refer to the related content in FIG. 8.

In some implementations, the first media data may be second media data created by a second application before the first application enables the first function, and a data format of the second media data is the same as that of media data processed through the third capability.

For example, with reference to FIG. 4, the first application may be the application A, and the second application may be the application B.

In other words, the first application and the second application may share media data by using an access mechanism. Different applications may invoke an interface provided by the first operating system, to unify and standardize media data of the applications, and share the media data.

In some implementations, the first media data may be obtained by parsing and reconstructing second media data created by a second application before the first application enables the first function, a data format of the second media data is different from that of media data processed through the third capability, and a data format of the first media data is the same as that of the media data processed through the third capability.

For example, with reference to FIG. 5, the first application may be the application A, and the second application may be the application B.

In other words, the second application may share media data by using a delegation mechanism. It is considered that some applications are not adapted to the first operating system, and cannot process media data through the first interface, the media data interface, the second capability, and the third capability to standardize a format of media data of the applications. Therefore, the media data may be directly parsed and reconstructed, and the media data is reassembled into media data in a unified format, so that another application can recognize and use the media data, thereby implementing data sharing between applications.

In some implementations, the first media data may be media data created by a second application, and the second application does not grant access permission on the first media data. Before the electronic device 100 enables the first function, the electronic device 100 may first access the second application to obtain permission of the first application to access the first media data. After obtaining the access permission from the second application, the electronic device 100 may enable the first function through the first application.

For example, with reference to FIG. 6, the first application may be the application A, and the second application may be the application B.

In other words, the media data may be shared between applications by using a dynamic mechanism. When an application needs to access media data across applications, a query-response manner may be used. After the application obtains access permission on the media data, a bridge for sharing the media data may be temporarily established. This avoids excessive opening and sharing of the media data, and ensures security of the media data.

It should be noted that the second application mentioned above may be an application on the electronic device 100. In this way, the electronic device 100 may implement smooth and simple data sharing between applications by using the plurality of mechanisms. Alternatively, the second application mentioned above may be an application on another electronic device such as a second electronic device. In this way, the electronic device 100 may implement smooth and simple data sharing between devices by using the plurality of mechanisms. The second electronic device may be a device that is logged in with a same account as the electronic device 100.

In conclusion, according to the data management method provided in embodiments of this application, a unified media data management platform can be provided to standardize media data of each application, so that each application can process the media data according to a unified rule and format. In addition, the unified media data management platform implements unified management of the media data, breaks an application boundary, makes data sharing between applications and between devices more simple and smooth, and improves user experience in using media data.

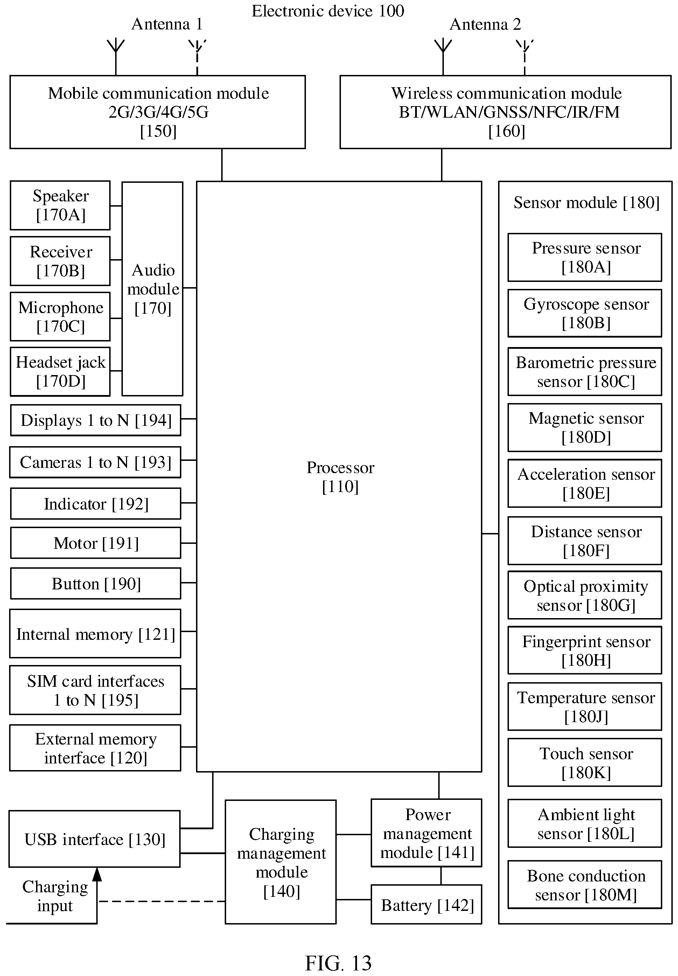

**FIG. 13** **is a diagram of a hardware structure of an electronic device 100 according to an embodiment of this application.**

The electronic device 100 may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, and/or a smart city device. A specific type of the electronic device is not limited in embodiments of this application.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or a combination of some components, or splits from some components, or a different component layout. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent devices, or may be integrated into one or more processors.

**In some implementations, the processor 110 may be configured to: manage running of an application, and enable an application function based on a user operation.**

The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that includes 2G/3G/4G/5G or the like and that is applied to the electronic device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules in the mobile communication module 150 may be disposed in a same device as at least some modules in the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 170A, the receiver 170B, or the like), or displays an image or a video through the display 194. In some embodiments, the modem processor may be an independent device. In some other embodiments, the modem processor may be independent of the processor 110, and is disposed in a same device as the mobile communication module 150 or another functional module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more devices integrating at least one communication processing module. The wireless communication module 160 receives an electromagnetic wave through the antenna 2, performs demodulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology.

The electronic device 100 may implement a display function through the GPU, the display 194, the application processor, and the like. The GPU is a microprocessor for image processing, and is connected to the display 194 and the application processor. The GPU is configured to: perform mathematical and geometric calculation, and render an image. The processor 110 may include one or more GPUs that execute program instructions to generate or change display information.

The display 194 is configured to display an image, a video, and the like. In some embodiments, the electronic device may include one or N displays 194, where N is a positive integer greater than 1.

**In some implementations, the display 194 may be configured to display a user interface of an application. The user interface may include an option used to enable an application function. The electronic device 100 may detect an operation performed by a user on the option, to enable the application function.**

The electronic device 100 may implement a shooting function through the ISP, the camera 193, the video codec, the GPU, the display 194, the application processor, and the like.

The camera 193 is configured to capture a static image or a video. In some embodiments, the electronic device 100 may include one or N cameras 193, where N is a positive integer greater than 1.

The internal memory 121 may include one or more random access memories (random access memories, RAMs) and one or more non-volatile memories (non-volatile memories, NVMs).

The random access memory may be directly read and written by the processor 110, may be configured to store executable programs (such as machine instructions) of an operating system or another running program, and may also be configured to store data of a user and an application, and the like.

The non-volatile memory may also store the executable programs, the data of the user and the application, and the like, and may be loaded into the random access memory in advance, to be directly read and written by the processor 110.

**In some implementations, the internal memory 121 may be configured to store media data, and a computer program for implementing the data management method provided in embodiments of this application. The media data may include but is not limited to a text, a picture, an audio, a video, and the like.**

The electronic device 100 may implement an audio function, for example, music playing or recording, through the audio module 170, the speaker 170A, the receiver 170B, the microphone 170C, the headset jack 170D, the application processor, and the like.

It should be understood that the steps in the foregoing method embodiments may be completed by using an integrated logic circuit of hardware in the processor or instructions in a form of software. The steps in the methods disclosed with reference to embodiments of this application may be directly performed and completed by a hardware processor, or may be performed and completed by using a combination of hardware in the processor and a software module.

This application further provides an electronic device. The electronic device includes a memory, a processor, and a computer program stored in the memory. The computer program includes a first operating system, a first application runs on the first operating system, and the first operating system provides a first interface, a media data interface, and a second capability. The first application is a third-party application, the first application includes program code for invoking the first interface, the first interface is configured to invoke the media data interface, and the media data interface encapsulates the second capability. The second capability includes a capability of performing one or more of the following processing on media data: acquiring, encoding, storing, sharing, decoding, and playing. The second capability further includes a third capability, and the third capability includes a capability of performing one or more of the following processing on the media data: setting a data model of the media data, setting a data type of the media data, managing a lifecycle of the media data, managing security of the media data, and performing distributed management on the media data. The processor executes the computer program to implement the method performed by the electronic device 100 in any one of the foregoing embodiments.

This application further provides a chip system. The chip system includes at least one processor, configured to implement functions in the method performed by the electronic device 100 in any one of the foregoing embodiments.

In a possible design, the chip system further includes a memory, the memory is configured to store program instructions and data, and the memory is located inside or outside the processor.

The chip system may include a chip, or may include a chip and another discrete device.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in embodiments of this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in embodiments of this application.

For example, the chip system may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a microcontroller unit (microcontroller unit, MCU), a programmable logic device (programmable logic device, PLD), or another integrated chip.

This application further provides a computer-readable storage medium. The computer-readable storage medium stores a computer program (which may also be referred to as code or instructions). The computer program includes a first operating system, a first application runs on the first operating system, and the first operating system provides a first interface, a media data interface, and a second capability. The first application is a third-party application, the first application includes program code for invoking the first interface, the first interface is configured to invoke the media data interface, and the media data interface encapsulates the second capability. The second capability includes a capability of performing one or more of the following processing on media data: acquiring, encoding, storing, sharing, decoding, and playing. The second capability further includes a third capability, and the third capability includes a capability of performing one or more of the following processing on the media data: setting a data model of the media data, setting a data type of the media data, managing a lifecycle of the media data, managing security of the media data, and performing distributed management on the media data. When the computer program is executed by a processor, the method performed by the electronic device 100 in any one of the foregoing embodiments is implemented.

This application further provides a computer program product. The computer program product includes a computer program (which may also be referred to as code or instructions). The computer program includes a first operating system, a first application runs on the first operating system, and the first operating system provides a first interface, a media data interface, and a second capability. The first application is a third-party application, the first application includes program code for invoking the first interface, the first interface is configured to invoke the media data interface, and the media data interface encapsulates the second capability. The second capability includes a capability of performing one or more of the following processing on media data: acquiring, encoding, storing, sharing, decoding, and playing. The second capability further includes a third capability, and the third capability includes a capability of performing one or more of the following processing on the media data: setting a data model of the media data, setting a data type of the media data, managing a lifecycle of the media data, managing security of the media data, and performing distributed management on the media data. When the computer program is executed by a processor, the method performed by the electronic device 100 in any one of the foregoing embodiments is implemented.

It should be noted that the processor in embodiments of this application may be an integrated circuit chip, and has a signal processing capability. In an implementation process, the steps in the foregoing method embodiments may be completed by using an integrated logic circuit of hardware in the processor or instructions in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component. The methods, the steps, and the logical block diagrams that are disclosed in embodiments of this application may be implemented or performed. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

In addition, an embodiment of this application further provides an apparatus. The apparatus may be specifically a component or a module, and the apparatus may include one or more processors and memories that are connected to each other. The memory is configured to store a computer program. When the computer program is executed by the one or more processors, the apparatus is enabled to perform the methods in the foregoing method embodiments.

The apparatus, the computer-readable storage medium, the computer program product, or the chip provided in embodiments of this application is configured to perform the corresponding method provided above. Therefore, for beneficial effects that can be achieved, refer to beneficial effects in the corresponding method provided above. Details are not described herein again.

The implementations of this application may be randomly combined to achieve different technical effects.

All or some of the foregoing embodiments may be implemented by using software, hardware, firmware, or any combination thereof. When the software is used to implement the embodiments, all or a part of the embodiments may be implemented in a form of the computer program product. The computer program product includes one or more computer instructions. When the computer program instructions are loaded and executed on a computer, the procedure or functions according to this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like.

A person of ordinary skill in the art may understand that all or some of the processes of the methods in embodiments may be implemented by a computer program instructing related hardware. The program may be stored in a computer-readable storage medium. When the program is run, the processes of the methods in embodiments are performed. The foregoing storage medium includes any medium that can store program code, such as a ROM, a random access memory RAM, a magnetic disk, or an optical disc.

In conclusion, the foregoing descriptions are merely embodiments of the technical solutions of this application, but are not intended to limit the protection scope of this application. Any modification, equivalent replacement, and improvement made according to the disclosure of this application shall fall within the protection scope of this application.

## Claims

1. A data management method, wherein the method is applied to a first electronic device, a first operating system runs on the first electronic device, a first application runs on the first operating system, the first operating system provides a first interface, a media data interface, and a second capability, the first application is a third-party application, the first application comprises program code for invoking the first interface, the first interface is configured to invoke the media data interface, the media data interface encapsulates the second capability, and the second capability comprises a capability of performing one or more of the following processing on media data: acquiring, encoding, storing, sharing, decoding, and playing; and the method comprises:
displaying a user interface of the first application, wherein the user interface presents a first option corresponding to the first function;
detecting an operation performed on the first option; and
enabling the first function through the first interface in response to the operation, wherein the first function is used to perform one or more of the following processing on first media data: acquiring, encoding, storing, sharing, decoding, and playing, the second capability further comprises a third capability, and in a process of enabling the first function, the third capability is used to perform one or more of the following: setting a data type of the first media data, managing a lifecycle of the first media data, managing security of the first media data, setting a data model of the first media data, and performing distributed management on the first media data.

2. The method according to claim 1, wherein a parameter input by the first interface comprises one or more of the following: a device name, an application name of the first application, and a parameter input by the first application, wherein the parameter input by the first application is a parameter of the first function and parameter content, and the parameter content comprises one or more of the following: description information of the first function, the first media data, and indication information of the first media data.

3. The method according to claim 2, wherein
the first function comprises a facial recognition function, and the parameter input by the first application comprises a parameter of the facial recognition function, coordinates of a face, and an image of the face;
or
the first function comprises a beautification function, and the parameter input by the first application comprises a parameter of the beautification function, a beautification level, and face information.

4. The method according to any one of claims 1 to 3, wherein a parameter input by the media data interface comprises capability indication information, the parameter of the first function, and the first media data or the indication information of the first media data, wherein the indication information of the first media data is all or some parameters input by the first application, and/or the indication information of the first media data is determined by the first operating system; and the capability indication information indicates a capability invoked by the media data interface in the second capability.

5. The method according to claim 4, wherein
the first function is a photographing function, the first media data comprises one or more of the following: a photographing flow and a preview flow, and the capability indication information indicates a capability of acquiring the first media data in the second capability;
or
the first function is a picture viewing function, the first media data comprises one or more of the following: a big picture and a thumbnail, and the capability indication information indicates a capability of storing the first media data in the second capability;
or
the first function is a music playing function, the first media data is a piece of music, the indication information of the first media data comprises one or more of the following: a music name, a music size, and music duration, and the capability indication information indicates a capability of playing the first media data in the second capability;
or
the first function is a file creation function or a file deletion function, the first media data is a file, the indication information of the first media data comprises one or more of the following: a file name, a file owner, a file path, and a file size, and the capability indication information indicates a capability of storing the first media data in the second capability.

6. The method according to any one of claims 1 to 5, wherein a parameter input by the second capability comprises the parameter of the first function and the first media data or the indication information of the first media data, wherein the indication information of the first media data is the all or some parameters input by the first application, and/or the indication information of the first media data is determined by the first operating system.

7. The method according to any one of claims 1 to 6, wherein the third capability comprises a media data type capability; and
the media data type capability is used to determine the data type of the first media data based on the parameter input by the first application, and the data type is a text, a picture, an audio, or a video.

8. The method according to any one of claims 1 to 7, wherein the third capability comprises a data lifecycle capability; and
the data lifecycle capability is used to perform one or more of the following: setting a validity period of the first media data, and processing the first media data when the validity period of the first media data expires.

9. The method according to any one of claims 1 to 8, wherein the third capability comprises a data security management capability; and
the data security management capability is used to verify whether content of the first media data complies with a preset regulation.

10. The method according to any one of claims 1 to 9, wherein the third capability comprises a unified media data capability, the unified media data capability is used to set the data model of the first media data when the some or all parameters input by the first application are null values; the data model of the first media data comprises the parameter of the first function and the first media data or the indication information of the first media data; and the indication information of the first media data is the all or some parameters input by the first application, and/or the indication information of the first media data is determined by the first operating system.

11. The method according to any one of claims 1 to 10, wherein the third capability comprises a distributed management capability; and
the distributed management capability is used to provide a capability of executing the first function on a second electronic device or a capability of executing the first function through a second application on the first electronic device, and the second electronic device and the first electronic device are logged in with a same account.

12. The method according to any one of claims 1 to 11, wherein the first media data is second media data created by the second application before the first application enables the first function, and a data format of the second media data is the same as that of media data processed through the third capability.

13. The method according to any one of claims 1 to 11, wherein the first media data is obtained by parsing and reconstructing second media data created by the second application before the first application enables the first function, a data format of the second media data is different from that of media data processed through the third capability, and a data format of the first media data is the same as that of the media data processed through the third capability.

14. The method according to any one of claims 1 to 11, wherein the first media data is media data created by the second application, and the second application does not grant access permission on the first media data; and
before the enabling the first function, the method further comprises:
querying the second application, to obtain permission of the first application to access the first media data.

15. The method according to any one of claims 12 to 14, wherein the second application is an application on the first electronic device or the second electronic device.

16. An electronic device, wherein the electronic device comprises a memory, a processor, and a computer program stored in the memory, the computer program comprises a first operating system, a first application runs on the first operating system, the first operating system provides a first interface, a media data interface, and a second capability, the first application is a third-party application, the first application comprises program code for invoking the first interface, the first interface is configured to invoke the media data interface, the media data interface encapsulates the second capability, the second capability comprises a capability of performing one or more of the following processing on media data: acquiring, encoding, storing, sharing, decoding, and playing, the second capability further comprises a third capability, and the third capability comprises a capability of performing one or more of the following processing on the media data: setting a data model of the media data, setting a data type of the media data, managing a lifecycle of the media data, managing security of the media data, and performing distributed management on the media data; and
the processor executes the computer program to implement the method according to any one of claims 1 to 15.

17. A computer-readable storage medium, wherein the computer-readable storage medium stores a computer program, the computer program comprises a first operating system, a first application runs on the first operating system, the first operating system provides a first interface, a media data interface, a second capability, and a third capability, the first application is a third-party application, the first application comprises program code for invoking the first interface, the first interface is configured to invoke the media data interface, the media data interface encapsulates the second capability, the second capability comprises a capability of performing one or more of the following processing on media data: acquiring, encoding, storing, sharing, decoding, and playing, the second capability further comprises the third capability, and the third capability comprises a capability of performing one or more of the following processing on the media data: setting a data model of the media data, setting a data type of the media data, managing a lifecycle of the media data, managing security of the media data, and performing distributed management on the media data; and
when the computer program is executed by a processor, the method according to any one of claims 1 to 15 is implemented.

18. A computer program product, wherein the computer program product comprises a computer program, the computer program comprises a first operating system, a first application runs on the first operating system, the first operating system provides a first interface, a media data interface, and a second capability, the first application is a third-party application, the first application comprises program code for invoking the first interface, the first interface is configured to invoke the media data interface, the media data interface encapsulates the second capability, the second capability comprises a capability of performing one or more of the following processing on media data: acquiring, encoding, storing, sharing, decoding, and playing, the second capability further comprises the third capability, and the third capability comprises a capability of performing one or more of the following processing on the media data: setting a data model of the media data, setting a data type of the media data, managing a lifecycle of the media data, managing security of the media data, and performing distributed management on the media data; and
when the computer program is executed by a processor, the method according to any one of claims 1 to 15 is implemented.
